# EUROPEAN PATENT APPLICATION

(11) **EP 4 637 210 A1**
(43) Date of publication of application: **22.10.2025**
(21) Application number: 23903085.1
(22) Date of filing: 10.10.2023
(51) Int. Cl.: H04W 28/16, H04W 84/12, H04W 92/20

(54) **ACCESS POINT, AND METHOD FOR CONTROLLING COORDINATED COMMUNICATION**

(30) Priority: 16.12.2022 JP 2022201270
(71) Applicant: Panasonic Intellectual Property Corporation of America, Torrance, CA 90504 (US)
(72) Inventor: KANAYA, Hiroyuki, Kadoma-shi, Osaka 571-0057 (JP); MOTOZUKA, Hiroyuki, Kadoma-shi, Osaka 571-0057 (JP); MIURA, Taichi, Kadoma-shi, Osaka 571-0057 (JP); URABE, Yoshio, Kadoma-shi, Osaka 571-0057 (JP); IWAI, Takashi, Kadoma-shi, Osaka 571-0057 (JP)
(74) Representative: Grünecker Patent- und Rechtsanwälte PartG mbB
(86) International application number: PCT/JP2023/036680
(87) International publication number: WO 2024/127786

(57) **Abstract**

This access point comprises a transceiver unit that transmits and receives information relating to reconfiguration of coordinated communication, and a control unit that reconfigures coordinated communication according to the received information relating to reconfiguration of coordinated communication.

## Description

### Technical Field

The present disclosure relates to an access point and a method for controlling coordinated communication.

### Background Art

As a successor standard of 802.11ax (hereinafter referred to as "11ax"), which is a standard of the Institute of Electrical and Electronics Engineers (IEEE) 802.11, technical specifications of 802.11be (hereinafter referred to as "11be") are being developed. 11ax is also referred to as High Efficiency (HE), and 11be is also referred to as Extreme High Throughput (EHT). Further, a successor standard of 11be may also be referred to as Ultra High Reliability (UHR), and discussions on requirements specification are in progress.

### Citation List

### Non Patent Literature

NPL 1
   IEEE 802.11-19/1961r1, Multi-AP Group Establishment
NPL 2
   IEEE 802.11-19/0103r1, AP Coordination in EHT
NPL 3
   IEEE Std 802.11-2020, December 2020

### Summary of Invention

In 11be and UHR, the application of Multi-AP coordination (hereinafter referred to as "coordinated communication") in which access points (each also referred to as "base station"; hereinafter referred to as "AP (Access Point)") coordinate to transmit and receive data to and from each terminal (also referred to as non-AP STA (Station); hereinafter referred to as "STA") has been discussed.

However, a reconfiguration procedure for a Multi-AP control target, for example, control when a coordinated communication target changes or coordinated communication becomes unnecessary due to a case where an AP or an STA stops or stops data transmission, a case where interference from APs and STAs that perform coordinated communication is reduced, or the like, has not been discussed. Further, control of APs that perform coordinated communication for each coordination scheme has not been discussed, either.

One non-limiting and exemplary embodiment facilitates providing a reconfiguration procedure for a Multi-AP controlled target.

An access point according to an exemplary embodiment of the present disclosure includes: a transceiver that transmits and receives information on reconfiguration of coordinated communication; and a controller that performs the reconfiguration of the coordinated communication according to the received information on the reconfiguration of the coordinated communication.

It should be noted that general or specific embodiments may be implemented as a system, an apparatus, a method, an integrated circuit, a computer program, a storage medium, or any selective combination thereof.

According to the present invention, it is possible to provide a radio communication apparatus and a communication method each of which controls coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an Element format;
FIG. 2 illustrates a table of Element IDs;
FIG. 3 illustrates an exemplary configuration of an STA;
FIG. 4 illustrates an exemplary configuration of an AP;
FIG. 5 illustrates an exemplary arrangement of APs and STAs;
FIG. 6 illustrates the overall steps;
FIG. 7 illustrates another exemplary arrangement of APs;
FIG. 8 illustrates an exemplary Coordination Group list indication format;
FIG. 9 illustrates an exemplary update indication format;
FIG. 10 illustrates an operation sequence;
FIG. 11 illustrates still another exemplary arrangement of APs;
FIG. 12 illustrates an operation sequence;
FIG. 13 illustrates an exemplary interference measurement request format;
FIG. 14 illustrates an exemplary interference measurement report format;
FIG. 15 illustrates yet another exemplary arrangement of APs; and
FIG. 16 illustrates an exemplary coordinated communication group list indication format.

### Description of Embodiments

### <Regarding Multi-AP Coordination>

As a configuration of coordinated communication, a method has been proposed in which APs that control coordinated communication (also referred to as Coordination Group, Coordination set, multi-AP group, AP candidate set) are defined and APs included in the target APs of the coordinated communication perform the coordinated communication (see Non-Patent Literature (hereinafter referred to as "NPL") 1).

On the other hand, Coordinated Orthogonal Frequency Division Multiple Access (C-OFDMA), Coordinated Time Division Multiple Access (C-TDMA), Coordinated Spatial Reuse (C-SR), Joint Transmissions (JT), and the like have been proposed as schemes for coordinated communication (see NPL 2).

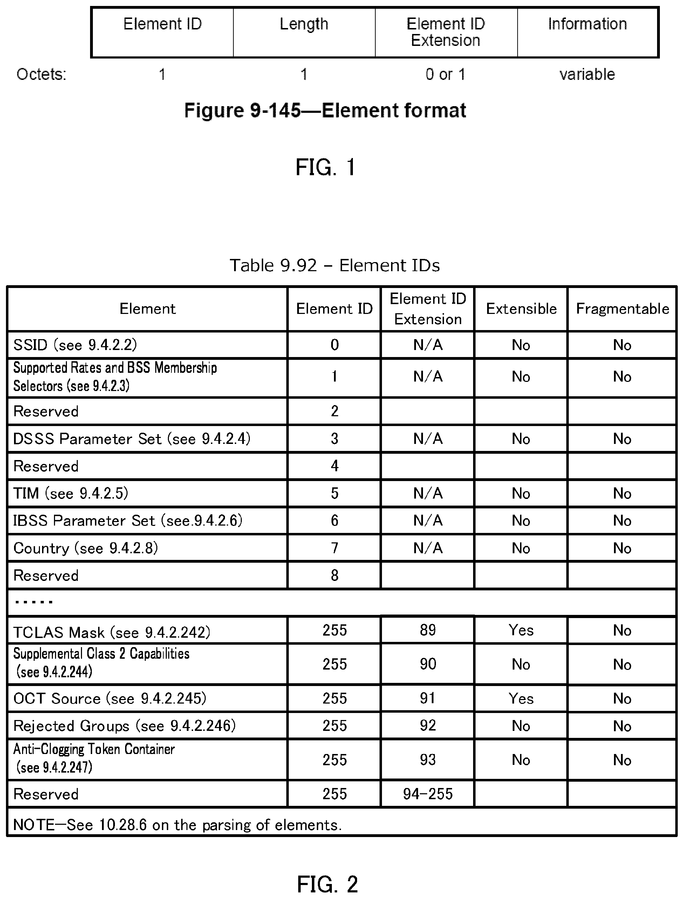

In addition, in IEEE802.11, there is an Element as information to be transmitted and received. FIG. 1 illustrates an Element format, and FIG. 2 illustrates a table of Element IDs (see NPL 3).

### <Embodiment 1>

In an embodiment of the present invention, APs included in a group configured by a plurality of operable APs in coordinated communication (hereinafter referred to as "Coordination Group") performs Multi-AP coordinated communication.

### [Configuration of STA]

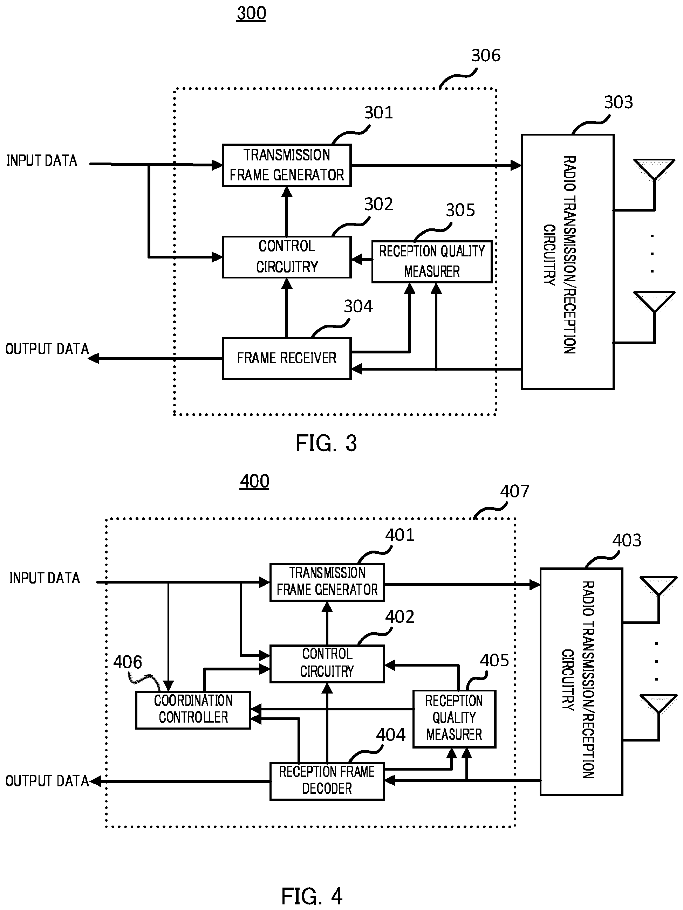

FIG. 3 illustrates an exemplary configuration of STA 300. STA 300 includes transmission frame generator 301, control circuitry 302, radio transmission/reception circuitry 303, frame receiver 304, and reception quality measurer 305. At least one of transmission frame generator 301, control circuitry 302, frame receiver 304, and reception quality measurer 305 may configure controller 306.

Transmission frame generator 301 generates a transmission frame based on input data and control information generated by control circuitry 302, and outputs the generated transmission frame to radio transmission/reception circuitry 303.

Control circuitry 302 generates the control information based on the input data, control information by frame receiver 304, a reception quality by reception quality measurer 305, and an internal state, and outputs the generated control information to transmission frame generator 301.

Radio transmission/reception circuitry 303 encodes and modulates the transmission frame by transmission frame generator 301, and generates a baseband transmission signal (also referred to as a Physical layer Protocol Data Unit (PPDU)). Further, radio transmission/reception circuitry 303 converts the PPDU into a high-frequency signal (also referred to as a Radio Frequency (RF) signal), and outputs the generated high-frequency signal to antennae.

Radio transmission/reception circuitry 303 receives a radio signal by using the antennae and outputs the received radio signal to frame receiver 304 and reception quality measurer 305.

Frame receiver 304 outputs output data received with a decoded frame and outputs the control information to reception quality measurer 305 and control circuitry 302.

Reception quality measurer 305 measures the reception quality based on the received signal by radio transmission/reception circuitry 303, the control information by frame receiver 304, and the internal state.

### [Configuration of AP]

FIG. 4 illustrates an exemplary configuration of AP 400. AP 400 includes transmission frame generator 401, control circuitry 402, radio transmission/reception circuitry 403, reception frame decoder 404, reception quality measurer 405, and coordination controller 406. The configuration of AP 400 may be a configuration obtained by adding coordination controller 406 to the configuration of STA 300 illustrated in FIG. 3. At least one of transmission frame generator 401, control circuitry 402, reception frame decoder 404, reception quality measurer 405, and coordination controller 406 may configure controller 407.

Transmission frame generator 401, control circuitry 402, radio transmission/reception circuitry 403, reception frame decoder 404, reception quality measurer 405 may have the same functions as transmission frame generator 301, control circuitry 302, radio transmission/reception circuitry 303, frame receiver 304, and reception quality measurer 305.

Coordination controller 406 generates coordination control information for performing control of coordinated communication, based on input data, control information by reception frame decoder 404, a reception quality by reception quality measurer 405, and an internal state, and outputs the generated coordinated control information to control circuitry 402.

### <Example 1>

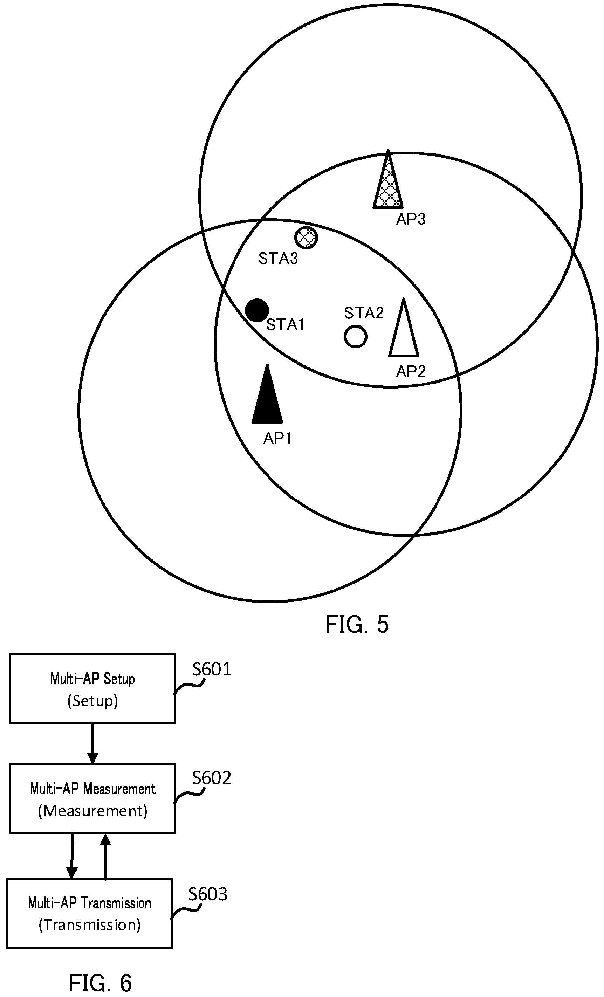

Hereinafter, as an example, FIG. 5 illustrates an exemplary arrangement of APs and STAs. An exemplary operation in a case where STA 3 stops in a state in which three APs and three STAs illustrated in FIG. 5 are arranged and perform coordinated communication will be demonstrated. Note that, in the exemplary arrangement of APs and STAs illustrated in FIG. 5, AP 1 is an AP that controls the coordinated communication (also referred to as a coordinator AP, a Primary AP, a Controller AP, or a Master AP; hereinafter referred to as "coordinator AP"), and AP 2 and AP 3 are APs that are controlled for the coordinated communication (each also referred to as a coordinated AP, a Secondary AP, an Agent AP, or a Slave AP; hereinafter referred to as "coordinated AP"). The AP-to-AP communication between AP 1 and AP 2 and the AP-to-AP communication between AP 2 and AP 3 are radio communication, and STA 1 is associated with AP 1, STA 2 is associated with AP 2, and STA 3 is associated with AP 3, respectively.

FIG. 6 illustrates the overall steps. As illustrated in FIG. 6, each AP performs Multi-AP setup S601, and then Multi-AP measurement S602 and Multi-AP transmission S603.

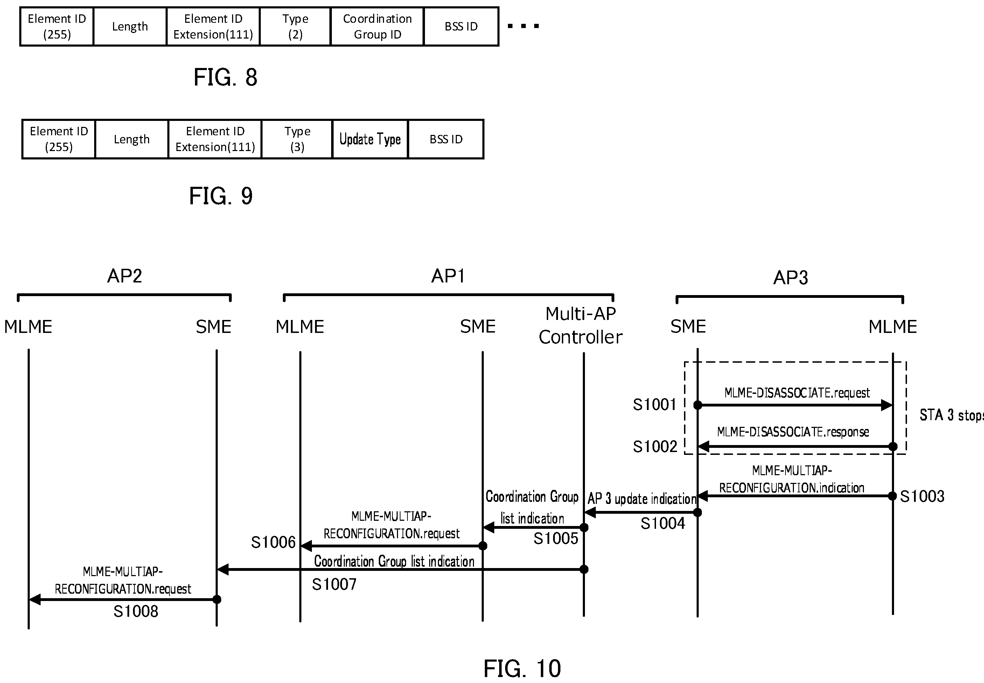

FIG. 8 illustrates a Coordination Group list indication format. In Multi-AP setup S601, AP 1 that is the coordinator AP forms a Coordination Group based on, for example, information on the neighboring APs, such as information included in received Beacons. Each AP may create a list of APs included in the Coordination Group (hereinafter referred to as "Coordination Group list") and indicate the Coordination Group list to the neighboring APs. The Coordination Group list may be indicated using the Coordination Group list indication format illustrated in FIG. 8.

In the exemplary arrangement illustrated in FIG. 5, AP 1 cannot receive the Beacon transmitted by AP 3, but AP 2 may transfer information included in the Beacon of AP 3 to AP 1, and a Coordination Group list may be (AP 1, AP 2, AP 3).

In Multi-AP measurement S602, the APs and/or the STAs may perform interference measurement by referring to the Coordination Group list. For example, each AP may measure interference from an AP(s) included in the Coordination Group list and an STA(s) associated with an AP(s) included in the Coordination Group list.

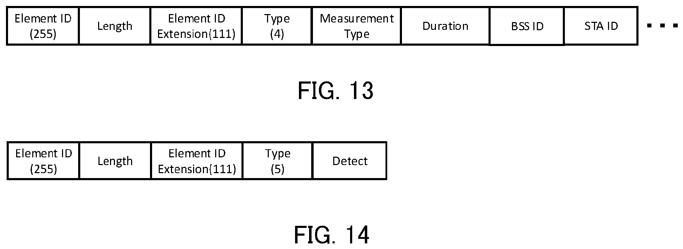

Each AP may request an AP(s) included in the Coordination Group list and an STA(s) associated with an AP(s) included in the Coordination Group list to measure interference from an AP(s) and an STA(s) as measurement targets and may cause interference measurement reports from each AP and each STA to be transmitted to the AP that has instructed the interference measurement. Each AP may transmit the Coordination Group list to an STA associated with each AP, may request the STA to measure interference by referring to the list, and may request the STA to report the interference measurement result as an interference measurement report to each AP. In the request for interference measurement, the interference measurement request format illustrated in FIG. 13 can be used. In the interference measurement report, the interference measurement report format illustrated in FIG. 14 can be used.

Each AP may transmit a trigger for instructing the execution of interference measurement to an STA associated with each AP.

In the present exemplary operation, STA 1 may measure interference from AP 2, AP 3, STA 2 associated with AP 2, and STA 3 associated with AP 3, where AP 2, AP 3, STA 2 and STA 3 are demonstrated in the Coordination Group list, and may transmit an interference measurement report to AP 1 associated with AP 1. STA 1 may perform the Multi-AP measurement periodically or may perform the Multi-AP measurement, for example, in a case where the path loss changes. For example, STA 1 may not execute Multi-AP measurement S602 in the case of an operation in a coordination scheme in which the measurement of interference is unnecessary, such as C-TDMA or C-OFDMA. AP 1 may indicate an interference measurement report to AP 2 and AP 3, which are APs demonstrated in the Coordination Group, by AP-to-AP communication.

In Multi-AP transmission S603, an AP that has acquired TXOP becomes a Sharing AP, and the Sharing AP performs coordinated communication, in which a plurality of AP included in the Coordination Group is transmission sources or transmission destinations, by referring to the interference measurement report by Multi-AP measurement S602 described above.

An exemplary operation in which there is no longer data to be transmitted or received by STA 3 associated with AP 3 and STA 3 stops data transmission and reception in a state in which each AP performs Multi-AP measurement S602 or Multi-AP transmission S603 illustrated in FIG. 6 will be described.

FIG. 9 illustrates an update indication format. AP 3 may indicate, for example, by the update indication format illustrated in FIG. 9, to AP 2 that there is no longer data to be transmitted to or received from STA 3 associated with AP 3. AP 2 that has received the update indication format may transfer the received update indication format to AP 1. AP 1 may delete AP 3 from the Coordination Group list based on information, which is included in the update indication format, that AP 3 has stopped data transmission and reception.

AP 1 may indicate the list, for which the deletion has been performed, to AP 2 by using, for example, the Coordination Group list indication format illustrated in FIG. 8.

As described above, since the number of APs and the STAs which become measurement targets in Multi-AP measurement S602 can be reduced by deleting an AP, which has stopped data transmission and reception, from a Coordination Group list and updating the Coordination Group list, it is possible to reduce the amount of information in an interference measurement result that is indicated to an AP by an STA, and throughput improves. In addition, the power consumption of an STA can be reduced by reducing the number of measurement targets of the STA. Further, since AP-to-AP communication of coordination control information or the like for an AP deleted from a Coordination Group list becomes unnecessary, throughput improves.

In a case where STA 3 resumes the operation or a new STA is associated with AP 3 and AP 3 initiates data transmission or reception, AP 3 may indicate to AP 2, for example, by using the update indication format illustrated in FIG. 9, that AP 3 has initiated the data transmission and reception, and AP 2 may transfer the update indication format to AP 1. AP 1 may add AP 3 to the Coordination Group list based on information in the update indication format to the effect that AP 3 has initiated the data transmission and reception. AP 1 may indicate, for example, by using the Coordination Group list indication format illustrated in FIG. 8, the Coordination Group list, to which AP 3 has been added, to AP 2. AP 2 may transfer the received Coordination Group list indication format to AP 3.

AP 3 may transmit a deletion indication, for example, with shutdown processing of AP 3 when AP 3 has stopped. In a case where AP 2 has become unable to receive the Beacon of AP 3 for a time defined in advance, AP 2 may transmit a deletion indication to AP 1. Here, for the time defined in advance, the maxlostbeacons demonstrated in NPL 3 may be used, or a newly provided value for determining the stop of an AP may also be used.

It may also be configured such that no Coordinator AP is determined. Each AP may create a Coordination Group list for each AP, for example, based on information on neighboring APs. The information on neighboring APs may be grasped based on received Beacons. An AP that has received an update indication, such as addition or deletion, by the update indication format illustrated in FIG. 9 may update its own Coordination Group list.

Further, each AP may broadcast its own Coordination Group list to neighboring APs. The Coordination Group list may be included in, for example, the Beacon and broadcast. Since each AP broadcasts a Coordination Group list, when each AP or STA receives a non-updated Coordination Group list, each AP or STA may determine that the AP that has transmitted the non-updated Coordination Group list had not been able to receive an update indication, and an AP(s) or STA(s) that has/have received an updated Coordination Group list may transfer the Coordination Group list.

Further, although an exemplary operation using a Coordination Group list has been demonstrated, a Coordinator AP may have information corresponding to a Coordination Group list instead of using a Coordination Group list and control Coordinated APs or each AP may have information corresponding to a Coordination Group list individually.

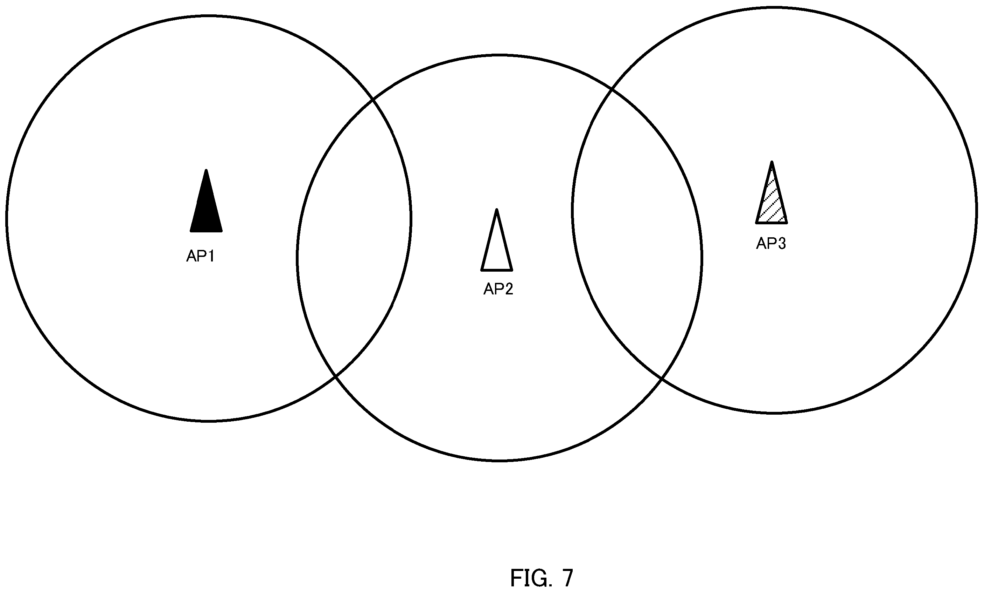

An AP may be included in a plurality of Coordination Groups. For example, in the exemplary arrangement of APs illustrated in FIG. 7, which is an exemplary arrangement different from that in FIG. 5, AP 2 may generate two Coordination Groups {(AP 1, 2), (AP 2, 3)} of a Coordination Group configured by (AP 1, 2) and a Coordination Group configured by (AP 2, 3). Coordination Groups may be distinguished by identification numbers such as, for example, a Coordination Group IDs.

### [Exemplary Formats]

Multi-AP-related control information or the like may be indicated using the Element format illustrated in FIG. 1. For example, Element ID = 255 and Element ID Extension = 111 in the table of Element IDs illustrated in FIG. 2 may be a Multi-AP element. The value of Element ID Extension has been described as 111 as an example, but another value indicative of an element as a Multi-AP element is also possible. A Multi-AP element may be included, for example, in information of a Management frame (for example, Beacon, Probe Response, Association Request, Re Association Request, Association Response, or Re Association Response frame), or may be included in another Action frame newly defined in the 11be standard or a successor standard. Further, the control information related to Multi-AP may be indicated in a format other than the Element format. A Multi-AP element may have another name, for example, a Multi-AP Information element.

The value in the Type field may be indicative of a subtype (also referred to as a variant) of a Multi-AP element. For example, in a Multi-AP element, it may be configured such that Type = 0 and Type = 1 are used as a format for Multi-AP setup, Type = 2 is used as a Coordination Group list indication format, Type = 3 is used as an update indication format, Type = 4 is also used as an interference measurement request format, and Type = 5 is used as an interference measurement report format.

FIG. 8 illustrates an exemplary Coordination Group list indication format. The Coordination Group list indication format includes identifiers (for example, BSS IDs, Mac addresses, BSS colors, and the like) of one or more APs or BSSs included in a Coordination Group. The Coordination Group list indication format may include an identifier indicative of a Coordination Group, such as a Coordination Group ID. As an example, the Coordination Group list indication format may include one or more BSS IDs included in a Coordination Group ID.

FIG. 9 illustrates an exemplary update indication format. The update indication format includes Update Type and BSS ID. The update type is indicative of the content to be indicated, for example, 0 is indicative of deletion and 1 is indicative of addition. It may also be configured such that 1 is indicative deletion and 0 is indicative of addition. The BSS ID is indicative of the identifier of an AP or BSS to be updated, such as a BSS ID, a Mac address, a color, or the like.

Although a case where a Coordination Group list indication format and an update indication format are defined as subtypes of a Multi-AP element has been described, information included in a Coordination Group list indication format and an update indication format may be included and indicated in another element (for example, a Multi-AP Information element) or a format other than the Element format (for example, a frame, a field, or the like).

### <Example 2>

An exemplary operation in a case where APs participating in a Coordination Group perform AP-to-AP communication via a backhaul line will be described. The backhaul line may be a wired line, a radio line, or a line in which wired and radio lines are mixedly present. The wired line may be, for example, Ethernet. The radio line may be of, for example, a BSS having an SSID different from that used in AP-to-STA communication, pre-association communication, a wireless LAN communication outside a BSS such as Outside the context of a BSS (OCB), or any other radio communication scheme.

For example, the procedure for Wi-Fi Easy Mesh may be used to construct a Multi-AP configuration. A Multi-AP Controller included in a Coordinator AP may control coordinated communication, such as updating a Coordination Group list. Indications related to coordinated communication between APs may be indications of station management entities (SMEs) and MAC sublayer management entities (MLMEs) via a Multi-AP Controller.

Hereinafter, an exemplary operation in which a Coordination Group list is updated in a case where AP 1 is a Coordinator AP and STA 3 stops in a state in which coordinated communication is performed in the exemplary arrangement illustrated in FIG. 5, which is the same as that in Example 1, will be described as an example.

FIG. 10 illustrates an operation sequence in the present exemplary operation. In AP 3 illustrated in FIG. 10, for example, the stop of STA 3 may be indicated by an MLME-DISASSOCIATE.request from the SME of AP 3 to the MLME of AP 3 (S1001). In the IEEE 802.11 standard, the SME may also be referred to as a higher layer.

The MLME (MAC layer) of AP 3 to which the MLME-DISASSOCIATE.request has been indicated may indicate an MLME-DISASSOCIATE.response to the SME of AP 3 (S1002), and may determine that coordinated communication with AP 3 as a target is unnecessary because there is no longer any STA associated with AP 3 due to the stop of STA 3 and STA 3 stops data transmission and reception.

The MLME of AP 3 may indicate the stop of the coordinated communication of AP 3 to the SME of AP 3 by, for example, an MLME-MULTIAP-RECONFIGURATION. indication (S1003). Note that, the indication of the stop of the coordinated communication may have the same data configuration as that in the update indication format illustrated in FIG. 9.

The SME of AP 3 may indicate the stop of the coordinated communication of AP 3 as an update indication of AP 3 to the Multi-AP Controller of AP 1 by AP-to-AP communication by means of wired connection (S1004). The Multi-AP Controller of AP 1 may perform an update to exclude AP 3 from the Coordination Group list.

The Multi-AP Controller of AP 1 may perform a Coordination Group list indication, in which the Coordination Group list has been updated, to the SMEs of AP 1 and AP 2 (S1005, S1007).

The SMEs of AP 1 and AP 2 may indicate a MLME-MULTIAP-RECONFIGURATION.request to the MAC layers of AP 1 and AP 2 by indicating the MLME-MULTIAP-RECONFIGURATION.request to the MLMEs of AP 1 and AP 2 (S1006, S1008). Note that, the MLME-MULTIAP-RECONFIGURATION.request may use the same data configuration as that in the Coordination Group list indication format illustrated in FIG. 8. In a case where the MLMEs of AP 1 and AP 2 have received the updated Coordination Group list indication format, the MLMEs of AP 1 and AP 2 may transmit a measurement request and/or a measurement report to APs included in a list of APs such as a list of BSS IDs included in the updated Coordination Group list indication format, and/or may measure the reception quality of Beacon frames, other frames, and/or NDPs transmitted from the APs included in the list. Further, the MLMEs of AP 1 and AP 2 may stop transmitting a measurement request and/or a report to an AP(s) such as AP 3, which is/are not included in the updated list, and/or may stop measuring the reception quality of Beacon frames, other frames, and/or NDPs transmitted from the APs included in the list.

As described above, the number of measurement targets in Multi-AP measurement S602 can be reduced by updating a Coordination Group list in the same manner as in Example 1, and thus, it is possible to improve throughput and to reduce the power consumption of an STA.

Note that, in a case where STA 3 resumes the operation or a new STA is associated with AP 3 and AP 3 initiates data transmission or reception, AP 3 may perform an indication to the Multi-AP Controller through the MLME and the SME of AP 3 and the AP-to-AP communication between AP 3 and AP 1. In this case, an MLME-MULTIAP-RECONFIGURATION. indication may be used for the indication between the MLME and the SME of AP 3, and the data configuration may be the same as that in the update indication format illustrated in FIG. 9.

Further, the Multi-AP controller may perform the same operation when AP 3 stops. For example, the Multi-AP Controller may verify whether there is a response from each AP by a ping or the like, exclude an AP(s), which does/do not reply, from the Coordination Group list, and update the Coordination Group list and indicate the updated Coordination Group list.

Further, it may also be configured such that the Multi-AP Controller does not manage the Coordination Group list, for example, the MAC layer of each AP manages its own list. In this case, an update indication may be indicated by an MLME-MULTIAP-RECONFIGURATION.request and/or an MLME-MULTIAP-RECONFIGURATION.response instead of a Coordination Group list. Alternatively, both an update indication and a Coordination Group list may be indicated. Alternatively, whether the MAC layer of each AP manages its own Coordination Group list may be specified for the MAC layer of each AP by, for example, an MLME-START.request, which is indicated by a higher layer at the time of the activation, or an MLME-START.response to be indicated to a higher layer. The indication content may be switched depending on whether the MAC layer of each AP manages its own Coordination Group list.

Further, although an exemplary operation in which the Multi-AP Controller controls coordinated communication has been demonstrated, instead of the Multi-AP Controller, a control apparatus that controls an extended service set (ESS) may control coordinated communication in the case of an ESS configuration.

Further, it may also be configured such that both wired and radio lines are mixedly present in AP-to-AP communication. In this case, the operation in Example 1 may be performed in the case of AP-to-AP communication with a radio line, and the operation in Example 2 may be performed in the case of AP-to-AP communication with a wired line.

### <Example 3>

In Examples 1 and 2, exemplary operations in which a Coordination Group is reconfigured due to the stop of an AP or STA, whereas in Example 3, an example in which coordinated communication is controlled in consideration of influence of interference by using a group configured by a plurality of APs that performs coordinated communication (hereinafter referred to as "Coordination Set") will be demonstrated. The Coordination Group is a group of access points that may possibly perform coordinated communication, and the Coordination Set is, in a Coordination Group, a group of access points in which coordinated communication is actually effective.

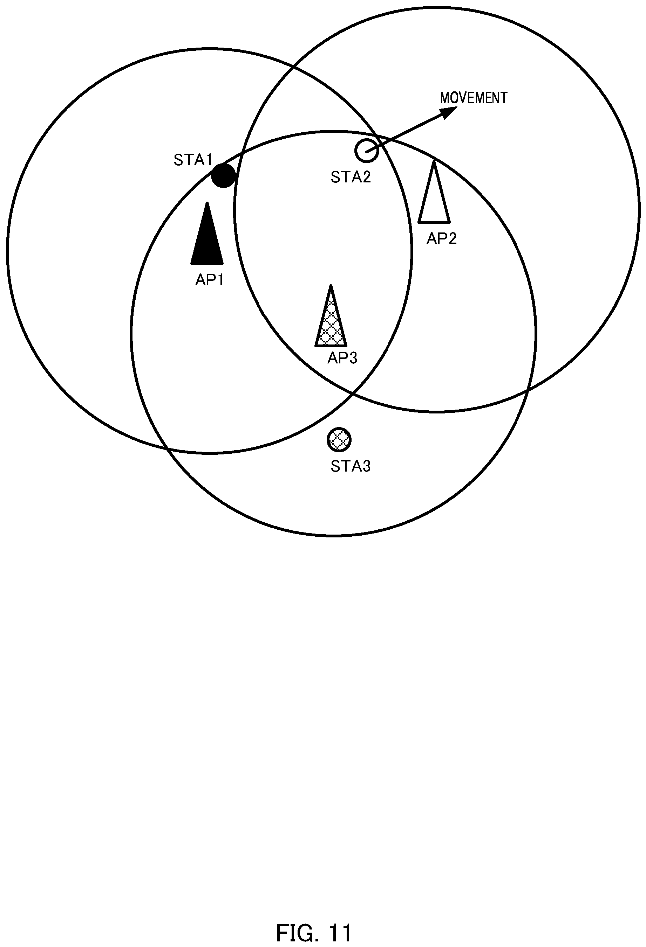

Hereinafter, as an example, FIG. 11 illustrates an exemplary arrangement in which three APs and three STAs are arranged. An exemplary operation in which STA 2 moves in the direction of the arrow in a state in which coordinated communication is performed in the exemplary arrangement of FIG. 11 will be described. Note that, in the arrangement illustrated in FIG. 11, the AP-to-AP communication between AP 1 and AP 3 and the AP-to-AP communication between AP 2 and AP 3 are radio communication, and STA 1 is associated with AP 1, STA 2 is associated with AP 2, and STA 3 is associated with AP 3. Further, it is configured such that AP 2 and STA 2 associated with AP 2 are affected by interference from AP 1 and STA 1 associated with AP 1 only before the movement. The Coordination Group list in Example 3 is the same (AP 1, AP 2, AP 3) as that in Example 1.

In a case where an AP and an STA associated with the AP are affected by interference from an AP and/or an STA associated with the AP, where the AP and the STA are included in the Coordination Group illustrated in Example 1 or 2, each AP may register the identifier of the AP, which has influence of the interference, in a Coordination Set.

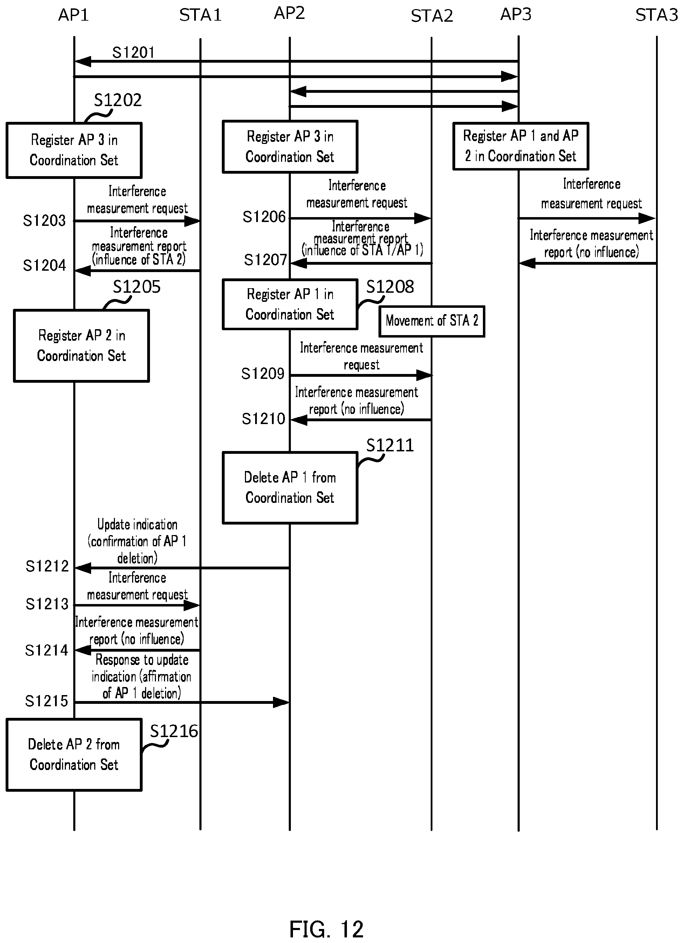

FIG. 12 illustrates an exemplary operation sequence in the exemplary arrangement illustrated in FIG. 11. AP 1 recognizes that AP 1 is affected by interference of AP 3 by receiving a frame transmitted by AP 3 (S1201).

When AP 1 recognizes, based on the BSS color included in the Preambles of the received frame, that AP 3 has transmitted the frame, AP 1 may determine that AP1 is affected by interference of AP 3, and may register AP 3 in a Coordination Set (S1202). In the same manner, AP 2 may register AP 3 in the Coordination Set, and AP 3 may register AP 1 and AP 2 in the Coordination Set.

Each AP may then update the Coordination Set based on the presence or absence of interference in an STA associated with each AP. For example, AP 1 may transmit an interference measurement request to STA 1 associated with AP 1 (S1203). FIG. 13 illustrates an exemplary interference measurement request format. In the interference measurement request, an operation that is reported in a case where an interference signal is received may be specified.

STA 1 that has received the interference measurement request may transmit a report of the interference measurement to AP 1 in a case where there is influence of interference (S1204). FIG. 14 illustrates an exemplary interference measurement report format. In the exemplary arrangement illustrated in FIG. 11, STA 1 is affected by interference due to STA 2. Based on the BSS color included in the Preambles of the received frame, STA 1 transmits, to AP 1, an interference measurement report to the effect that STA 1 is affected by interference due to STA 2 associated with AP 2.

AP 1 may add AP 2 to the Coordination Set based on the received interference measurement report (S1205).

AP 2 and AP 3 performs the same processing as AP 1. AP 2 may transmit an interference measurement request to STA 2 associated with AP 2 (S1206). STA 2 may perform transmission to AP 2 to the effect that STA 2 is affected by interference due to STA 1 and/or AP 1 (S1207). AP 2 may add AP 1 to the Coordination Set (S1208).

Each AP may perform Multi-AP measurement S602 and Multi-AP transmission S603 illustrated in FIG. 6 by referring to the Coordination Set instead of the Coordination Group illustrated in Examples 1 and 2.

Each AP may transmit the interference measurement request illustrated in FIG. 13 to an STA associated with each AP in order to detect a change in the reception environment. For example, AP 2 may transmit an interference measurement request to STA 2 (S1206, S1209). In the interference measurement request, an operation that is reported in a case where no longer any interference signal from STA 1 and/or AP 1 is received may be specified.

An exemplary operation in a case where STA 2 moves in a direction away from AP 1 and STA 2 is not affected by interference from STA 1 and AP 1 in a state in which each AP performs Multi-AP measurement S602 and Multi-AP transmission S603 illustrated in FIG. 6 will be described.

Since STA 2 is no longer affected by interference from STA 1 and AP 1 due to the movement, STA 2 may transmit, as a response to the received interference measurement request (S1209), an interference measurement report with no influence of interference to AP 2 (S1210). AP 2 may delete AP 1 from the Coordination Set based on the received interference measurement report (S1211).

As described above, since the number of APs and STAs which become measurement targets in Multi-AP measurement S602 can be reduced even when a Coordination Set is used instead of a Coordination Group, it is possible to reduce the amount of information in an interference measurement result that is indicated to an AP by an STA. As a result, throughput improves. The power consumption of an STA can be reduced by reducing the number of measurement targets of the STA. In addition, throughput improves since it is possible to prevent unnecessary AP-to-AP communication by configuring the targets of AP-to-AP communication to be APs included in a Coordination Set.

By using a Coordination Set, which is a group that actually performs coordinated communication, from a Coordination Group, a group that currently performs coordinated communication can be managed with the Coordination Set according to the interference situation while a group that may possibly perform the coordinated communication in a semifixed manner is managed with a Coordination Group.

AP 2 may perform an indication for confirming whether AP 1 is allowed to be deleted from the Coordination Set, to AP 1 (S1212). For example, the update indication format illustrated in FIG. 9 may be used for confirming whether the deletion is allowed. Instead of confirming whether AP 1 is allowed to be deleted, AP 2 may indicate the Coordination Set, from which AP 1 has been deleted, to AP 1.

AP 1 that has received the indication for confirming whether AP 1 is allowed to be deleted may transmit, to STA 1, an interference measurement request for AP 2 and an STA associated with AP 2 (S1213). In the interference measurement request, an operation to report the presence or absence of an interference signal may be specified.

STA 1 that has received the interference measurement request may transmit an interference measurement report regarding the presence or absence of influence of interference to AP 1 (S1214). Since STA 2 has already moved, STA 1 may transmit, to AP 1, an interference measurement report to the effect that there is no influence of interference due to STA 2.

AP 1 may transmit a response to the update indication to AP 2 based on the interference measurement report of STA 1 (S1215). AP 2 may perform the processing of deleting AP 1 from the Coordination Set (S1211) after receiving the response to the update indication (S1215).

In a case where STA 1 indicates, in the interference measurement report, to AP 1 in S1214 that there is influence of interference, AP 1 may transmit, to AP 2, a response to the update indication to the effect that AP 1 negates the deletion of AP 1 from the Coordination Set of AP 2. In a case where STA 1 indicates, in the interference measurement report, to AP 1 in S1214 that there is no influence of interference, AP 1 may transmit, to AP 2, a response to the update indication to the effect that AP 1 affirms the deletion of AP 1 from the Coordination Set of AP 2. In the response to the update indication, the interference measurement report format illustrated in FIG. 14 may be used.

AP 1 may delete AP 2 from the Coordination Set of AP 1 based on the update indication of AP 2 or the result of the interference measurement of STA 1 (S1216). Thus, it is possible to update the Coordination Sets of both AP 1 and AP 2.

Although an exemplary operation in which AP 1 transmits an interference measurement request to STA 1 has been demonstrated, AP 1 may transmit an interference measurement request to every STA associated with AP 1 by means of broadcast information. Thus, it is possible for AP 1 to confirm whether every STA associated with AP 1 is affected by interference due to AP 2 and an STA associated with AP 2. In addition, although an exemplary operation in which an operation to report the presence or absence of an interference signal is specified with an interference measurement request has been demonstrated, an operation that is reported in a case where an interference signal has been received may also be specified. Thus, it is possible to prevent the transmission of an interference measurement report from an STA that does not receive any interference signal.

Although exemplary operations using a Coordination Group and a Coordination Set have been demonstrated, it may also be configured such that only a Coordination Group is used and an AP which is less affected by interference is deleted from the Coordination Group.

Although an exemplary operation in which influence of interference is determined based on whether an interference signal has been received has been demonstrated, it may be determined that there is influence of interference in a case where reception power of an interference signal is equal to or greater than a threshold. In this case, the threshold of reception power may be added to the interference measurement request format illustrated in FIG. 13.

In a case where STA 2 returns to, for example, a position where STA 2 receives interference due to AP 1, such as its original position, STA 2 may perform an indication to the effect that STA 2 has received an interference signal, to AP 2 with, for example, the interference measurement report format illustrated in FIG. 14. In this case, AP 2 may transmit an interference measurement request to STA 2 in advance. In the interference measurement request, an operation that is reported in a case where an interference signal from STA 1 and/or AP 1 has been received may be specified. In the same manner as in the operation when STA 2 is deleted, AP 2 may add AP 1 to the Coordination Set of AP 2 and perform an indication for confirming whether AP 1 is allowed to be added, to AP 1.

In the case of a configuration in which direct AP-to-AP communication is impossible between AP 1 and AP 2 as in FIG. 11, an indication may be performed through, for example, AP 3, or an indication may be performed by a higher layer. The indication by a higher layer may include an indication with a wired line.

A Coordinator AP may manage a Coordination Set of an AP included in a Coordination Group. For example, in a case where AP 3 is the Coordinator AP in FIG. 11, AP 2 may transmit an interference measurement report on interference due to STA 2 to AP 3. AP 3 may transmit an interference measurement request to AP 1 based on the interference measurement report received from AP 2. AP 1 may perform interference measurement based on the interference measurement request received from AP 3 and transmit an interference measurement report to AP 3. AP 3 may update the Coordination Set according to the interference measurement reports received from AP 2 and AP 1 and transmit a list of APs included in the updated Coordination Set (hereinafter referred to as "Coordination Set list") to AP 1 and AP 2.

In the transmission of a Coordination Set list, the Coordination Group list indication format illustrated in FIG. 8 may be used. In order to identify whether an indication target is a Coordination Group list or a Coordination Set list, information for performing identification (for example, ListType field) may be added to the Coordination Group list indication format, and it may be configured such that "ListType = 0" is indicative of a Coordination Group list as the indication target and "ListType = 1" is indicative of a Coordination Set list as the indication target. The numbers of Coordination Group IDs included in the Coordination Group list indication format may be separated between a Coordination Group list and a Coordination Set list. For example, it may be configured such that the indication target is a Coordination Group for Coordination Group IDs whose numbers are equal to or larger than 128, and the indication target is a Coordination Set for Coordination Set IDs whose numbers are equal to or less than 127. Information for performing identification (for example, ListType field) may be omitted by using numbers separated between a Coordination Group list and a Coordination Set list.

Although an exemplary operation in which a Coordination Set is created by referring to a Coordination Group has been demonstrated, a Coordination Set may be created without referring to a Coordination Group.

Interference influence information for each AP or for each BSS may be added to a Coordination Set list and/or a Coordination Group list. For example, interference influence information for each BSS may be added to the Coordination Group member list indication format illustrated in FIG. 8. The interference influence information may be configured, for example, such that "0: there is interference from AP and STA, 1: there is interference from only AP, 2: there is interference from only STA, 3: no interference". An unnecessary request for measurement can be prevented by referring to interference influence information and requesting an STA to perform interference measurement. For example, in FIG. 11, a Coordination Group member list of AP 2 in a case where interference influence information is added is "AP 1(2), AP 3(1)" (the value in parentheses () is indicative of the value of interference influence information) before the movement of STA2, and is "AP 1(3), AP 3(1)" after the movement of STA 2. AP 2 may transmit the interference measurement request illustrated in FIG. 12 to STA 2 for which the interference influence information is 2, that is, which is affected by interference from an AP that involves: there is interference from only STA (that is, AP 1).

Instead of adding interference influence information to a Coordination Set list and/or a Coordination Group list, for example, a list that summarizes APs involving: "there is interference from only STA" may be created.

### [Exemplary Formats]

FIG. 13 illustrates an interference measurement request format. As the interference measurement request, the interference measurement request format illustrated in FIG. 13 may be used. FIG. 13 illustrates an example of Type = 4 in the Multi-AP element.

The interference measurement request format illustrated in FIG. 13 includes Measurement Type, Duration, BSS ID, and STA ID. The Measurement Type is indicative of an interference measurement method. The Duration is indicative of a measurement time according to the interference measurement method demonstrated in the Measurement Type. The BSS ID is indicative of BSS IDs of an AP(s) and an STA(s) as interference measurement targets, such as BSS colors, for example. The STAID is indicative of an ID of an STA that performs measurement, such as an AID, for example.

The Measurement Type is indicative of the type of the interference measurement method, for examples, as 0-3.

For example, Measurement Type = 0 demonstrates that an interference measurement report is transmitted in a case where, after receiving an interference measurement request format or after receiving an interference signal from a measurement target specified by a BSS ID (hereinafter referred to as "target interference signal"), no target interference signal is received even when the time demonstrated in the Duration has elapsed, and that an operation to confirm the presence or absence of an interference signal is repeatedly executed for each time demonstrated in the Duration in a case where a target interference signal is received before the time demonstrated in the Duration has elapsed. In the interference measurement report, the interference measurement report format in FIG. 14 can be used.

For interference measurement request S1206 from AP 2 to STA 2 before the movement of STA 2 illustrated in FIG. 11, Type = 0 may be specified. In a case where Type = 0 is specified for interference measurement request S1206, STA 2 does not transmit the interference measurement report in S1207 and performs monitoring until STA 2 no longer receives any interference signal; and for example, in a case where STA 2 no longer receives any interference signal, such as in a case where STA 2 has moved and no longer receives any interference signal of STA 1/AP 1, STA 2 transmits the interference measurement report. STA 2 may report, for each duration demonstrated in the Duration, that STA 2 has received an interference signal.

For example, Measurement Type = 1 demonstrates that an interference measurement report on whether a target interference signal has been received is transmitted after the time demonstrated in the Duration has elapsed after receiving an interference measurement request format. In the interference measurement report, the interference measurement report format in FIG. 14 can be used. For interference measurement request S1203, S1213 from AP 1 to STA 1 demonstrated in the present example, Type = 1 may be specified.

For example, Measurement Type = 2 demonstrates that an interference measurement report is transmitted in a case where a target interference signal from a target has been received. For interference measurement request S1209 from AP 2 to STA 2 after the movement of STA 2 demonstrated in the present example, Type = 2 may be specified. In a case where Type = 2 is specified for interference measurement request S1209, STA 2 does not transmit the interference measurement report in S1210 and performs monitoring until STA 2 receives an interference signal; and for example, in a case where STA 2 has received an interference signal, such as in a case where STA 2 has returned to its original location and has received an interference signal from STA 1/AP 1, STA 2 transmits the interference measurement report. STA 2 may report, for each duration demonstrated in the Duration, that STA 2 has not received any interference signal, or may exclude the Duration from the format in the case of Measurement Type = 2. In the interference measurement report, the interference measurement report format in FIG. 14 can be used.

For example, for Measurement Type = 3, the stop of the interference measurement request specified in Measurement Types = 0 and 2 may be instructed. In the interference measurement request, the format in FIG. 13 can be used.

Note that, an AP may control the transmission destination and Type of an interference measurement request by Capability information of an STA. For example, an AP may transmit an interference measurement request with Measurement Type = 0 or 2 to an STA, for which reduction in power consumption is unnecessary, and may transmit an interference measurement request with Measurement Type = 1 to an STA, for which reduction in power consumption is necessary, in a case where the AP has received an interference measurement report from an STA. Thus, it is possible to reduce the interference measurement time and/or the number of times of interference measurement reports for an STA for which reduction in power consumption reduction is necessary, and it is possible to preventing power consumption from increasing. In the interference measurement report, the interference measurement report format in FIG. 14 can be used.

By including a plurality of BSS IDs in an interference measurement request format, an interference signal may be indicated to a plurality of targets with one interference measurement request format.

In the case of the transmission to each individual STA, the STAID may be deleted from the interference measurement request format.

FIG. 14 illustrates an interference measurement report format. As the interference measurement report, the interference measurement report format illustrated in FIG. 14 may be used. Note that, FIG. 14 illustrates an example of Type = 5 in the Multi-AP element.

The interference measurement report format illustrated in FIG. 14 includes Detect. The Detect is indicative of the presence or absence of an interference signal of the target specified in the interference measurement request illustrated in FIG. 13. It may be configured such that 0 demonstrates that there is no interference and 1 demonstrates that there is interference, or it may also be configured such that 1 demonstrates that there is no interference and 0 demonstrates that there is interference.

Note that, in the interference measurement request format illustrated in FIG. 13, the Detect field may be excluded in the case of a response to Measurement Types = 0 and 2 or an Ack may be transmitted instead of an interference measurement report.

In a case where, for example, a plurality of BSS IDs is specified in the interference measurement request format illustrated in FIG. 13, the BSS IDs to be reported may be added to the interference measurement report format.

Although FIGS. 13 and 14 illustrate exemplary formats of an interference measurement request and an interference measurement report by the Multi-AP element, an interference measurement request and an interference measurement report may be indicated through a higher layer, for example, in the case of wired connection between APs. In this case, information demonstrated in the interference measurement request and the interference measurement report may be indicated by an MLME-MULTIAP-RECONFIGURATION.request and/or an MLME-MULTIAP-RECONFIGURATION response.

### (Embodiment 2)

In an embodiment of the present disclosure, a list of coordinated communication APs in which coordinated communication for each coordination scheme is enabled is indicated. In an embodiment of the present disclosure, a group configured by APs in which coordinated communication is enabled (hereinafter referred to as "coordinated communication group") is created, and the APs included in the coordinated communication group perform coordinated communication. The configurations of STAs and APs may be identical to the configurations demonstrated in Embodiment 1.

### <Example 4>

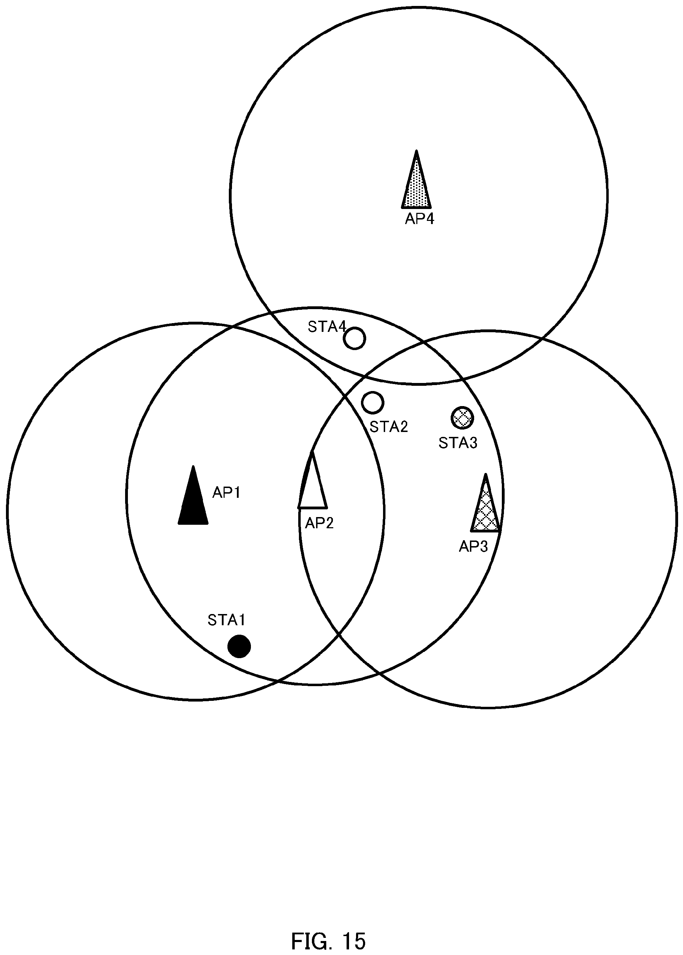

Hereinafter, an exemplary state in which four APs and four STAs are arranged as illustrated in FIG. 15 and coordinated communication is performed will be described as an example. Note that, in the arrangement illustrated in FIG. 15, STA 1 is associated with AP 1, STA 2 is associated with AP 2, STA 3 is associated with AP 3, and STA 4 is associated with AP 4. In addition, it is configured such that each Coordination Group list of AP 1, AP 2, AP 3, and AP 4 demonstrated in Example 1 is (AP 1, AP 2, AP 3, AP 4).

Each AP may create a coordinated communication group from the Coordination Group.

For example, coordination schemes C-OFDMA, C-TDMA, C-CSR, and C-BF are effective coordination schemes in a case where there is influence of interference between an AP and an STA. A list composed of APs that are affected by interference (hereinafter referred to as "interference influence list") may be created for each AP, and the coordination scheme C-OFDMA, C-TDMA, C-CSR or C-BF may be executed using the APs included in the interference influence list.

In a coordination scheme JT, for example, an operation in which data to be transmitted is transferred between a plurality of APs and the plurality of AP simultaneously transmits the data may be performed. In the JT, throughput decreases since the transmission bandwidth and/or transmission time required for transferring data between APs increase(s) in the case of radio connection between APs and a low MCS, that is, a large path loss between APs. That is, a group of APs in which the JT is effective is a group composed of APs, which are connected by wired connection, and/or APs with a small path loss between the APs. A list of APs in which the JT is effective is called a JT list. Note that, a small path loss between APs may refer to a case where the path loss which is the distance between APs is sufficiently smaller than the radio-wave-reachable distance for the APs. The coordination scheme JT may be executed using APs included in a JT list.

An exemplary operation in which AP 2 creates an interference influence list in the arrangement illustrated in FIG. 15 will be described.

Each AP creates a Coordination Group list by the same operation as the Multi-AP setup demonstrated in Examples 1 and 2, and when each AP receives a Beacon(s) from an AP(s) included in the Coordination Group list, each AP adds the AP(s) that had transmitted the Beacon(s), which has/have been received by each AP, to an interference influence list. In the exemplary arrangement illustrated in FIG. 15, the interference influence list of AP 2 is (AP 1, AP 3). Further, each AP may also transmit, to an STA associated with each AP, an interference measurement request for another AP and an STA associated with the other AP. In this interference measurement request, for example, an interference measurement request format in which Measurement Type = 2 is specified may be used. The STA that has received the interference measurement request may transmit an interference measurement report to the AP.

In the exemplary arrangement illustrated in FIG. 15, STA 2 associated with AP 2 receives a frame transmitted by STA 4. Based on the BSS color included in the Preambles of the received frame, STA 2 may transmit, to AP 2, the interference measurement report format illustrated in FIG. 14 to the effect that there is influence of interference from AP 4. AP 2 may add AP 4 to the interference influence list.

An exemplary operation in which AP 2 creates a JT list in the arrangement illustrated in FIG. 15 will be described.

Each AP creates a Coordination Group list by the same operation as Multi-AP setup S601 demonstrated in Examples 1 and 2, and when each AP receives a Beacon(s) from an AP(s) included in the Coordination Group list, each AP adds an AP(s) that has/have transmitted a Beacon(s) having large reception power to a JT list. In the exemplary arrangement illustrated in FIG. 15, AP 2 may add AP 1 to the JT list.

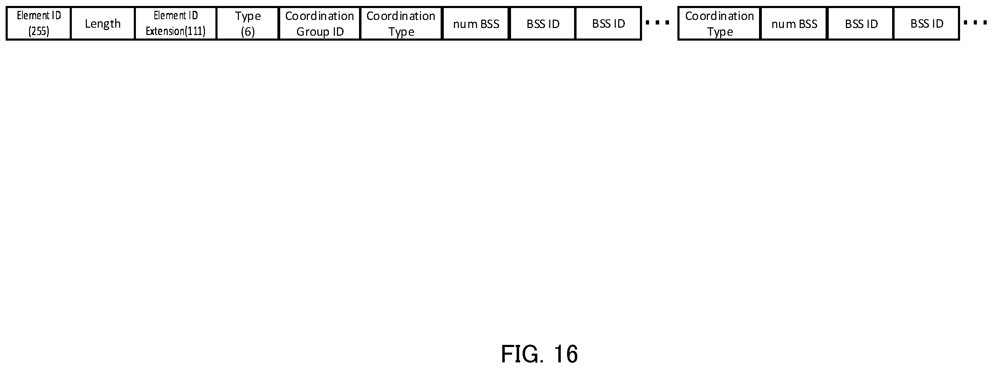

FIG. 16 illustrates an exemplary coordinated communication group list indication format. The coordinated communication group created by each AP may be transmitted to APs and/or a coordinator AP, which are included in the coordinated communication group, by using, for example, the coordinated communication group list indication format illustrated in FIG. 16. In a case where the coordinated communication group list that each AP has does not coincide with a coordinated communication group list received from another AP, each AP may request a modification of the coordinated communication group list by transmitting, for example, the update indication format illustrated in FIG. 9 to the AP, which had transmitted the coordinated communication group list that has been received by each AP, and/or the coordinator AP. In the request for the modification, for example, the Coordination Type illustrated in FIG. 16 may be added, as a target to be updated, to the update indication format illustrated in FIG. 9.

As described above, an AP can select an available AP(s) for each coordination scheme to be executed by creating a coordinated communication group. Further, when each AP transmits a coordinated communication group list to APs and/or a coordinator AP, which are included in the coordinated communication group, the coordinated communication group lists, which the APs that execute the coordinated communication have, can be configured to be identical.

### [Exemplary Format]

FIG. 16 illustrates a coordinated communication group list indication format. The coordinated communication group list indication may be indicated by the coordinated communication group list indication format illustrated in FIG. 16. FIG. 16 illustrates an example of Type = 6 in the Multi-AP element.

The coordinated communication group list indication format includes Coordination Group ID, Coordination Type, num BSS, and BSS ID.

The Coordination Group ID is indicative of the same identifier as the Coordination Group ID illustrated in FIG. 8. The Coordination Type is indicative of a coordination scheme of a coordinated communication group list, such as an interference influence list and a JT list. The num BSS is indicative of the number of APs included in a coordinated communication group list of the coordination scheme demonstrated in the Coordination Type, which is the number in the BSS ID following the num BSS. The BSS ID is indicative of the IDs of APs included in a coordinated communication group list of the coordinated communication scheme demonstrated in the Coordination Type, which are the IDs of the APs that configure the coordinated communication group list.

In a case where the Coordination Type is a JT list, the number of STAs as targets and the IDs of the STAs may be added to the format.

The embodiments have been each described above with reference to the drawings, but the present disclosure is not limited to such examples. It is apparent that those skilled in the art can arrive at various modifications or variations at within the scope of the claims, and it is naturally understood that such modifications or variations are also within the technical scope of the present disclosure. In addition, any combination of component elements in the above-mentioned embodiment may be made without departure from the spirit of the present disclosure.

In the embodiments described above, the notation "... processor", "...er", "...or" or "...ar" used for each component may be replaced with another notation such as "... circuitry", "... assembly", "... device", "... unit" or "... module".

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module including amplifiers, RF modulators/demodulators and the like, and one or more antennae. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

In addition, in recent years, in Internet of Things (IoT) technology, Cyber Physical Systems (CPS), which is a new concept of creating new added value by information collaboration between physical space and cyberspace, has been attracting attention. Also in the above embodiments, this CPS concept can be adopted.

That is, as a basic configuration of the CPS, for example, an edge server disposed in the physical space and a cloud server disposed in the cyberspace can be connected via a network, and processing can be performed in a distributed manner by processors mounted on both of the servers. Here, it is preferable that processed data generated in the edge server or the cloud server be generated on a standardized platform, and by using such a standardized platform, it is possible to improve efficiency in building a system including various sensor groups and/or IoT application software.
(1) An access point according to an exemplary embodiment of the present disclosure includes: a transceiver that transmits and receives information on reconfiguration of coordinated communication; and a controller that performs the reconfiguration of the coordinated communication according to the received information on the reconfiguration of the coordinated communication.
(2) In the access point according to an exemplary embodiment of the present disclosure, in the access point of (1), the transceiver transmits information on a change in an operation of the access point to a neighboring access point.
(3) In the access point according to an exemplary embodiment of the present disclosure, in the access point of (1), the controller adds or deletes another access point, whose addition or deletion has been indicated, to or from a plurality of access points performing the coordinated communication.
(4) In the access point according to an exemplary embodiment of the present disclosure, in the access point of (1), the reconfiguration of the coordinated communication is performed according to influence of interference.
(5) In the access point according to an exemplary embodiment of the present disclosure, in the access point of (4), the influence of the interference is based on a result of measurement of influence of interference from another access point in the coordinated communication and a terminal associated with the other access point in the coordinated communication.
(6) In the access point according to an exemplary embodiment of the present disclosure, in the access point of (4), the information on the reconfiguration of the coordinated communication is information on another access point in which the coordinated communication in consideration of the influence of the interference is effective.
(7) In the access point according to an exemplary embodiment of the present disclosure, in the access point of (1), the information on the reconfiguration of the coordinated communication is information on another access point in which the coordinated communication for each coordination scheme is effective.
(8) A method for controlling coordinated communication according to an exemplary embodiment of the present disclosure includes: receiving, by an access point, information on reconfiguration of coordinated communication; and performing, by the access point, the reconfiguration of the coordinated communication according to the received information on the reconfiguration of the coordinated communication.

The disclosure of Japanese Patent Application No. 2022-201270, filed on December 16, 2022, including the specification, drawings and abstract, is incorporated herein by reference in its entirety.

### Industrial Applicability

The present disclosure is useful for coordinated communication.

### Reference Signs List

300 STA
301, 401 Transmission frame generator
302 Control circuitry
303 Radio transmission/reception circuitry
304 Frame receiver
305, 405 Reception quality measurer
306, 407 Controller
400 AP
402 Control circuitry
403 Radio transmission/reception circuitry
404 Reception frame decoder
406 Coordination controller

## Claims

1. An access point, comprising:
a transceiver that transmits and receives information on reconfiguration of coordinated communication; and
a controller that performs the reconfiguration of the coordinated communication according to the information on the reconfiguration of the coordinated communication, the information on the reconfiguration of the coordinated communication having been received.

2. The access point according to claim 1, wherein
the transceiver transmits information on a change in an operation of the access point to a neighboring access point.

3. The access point according to claim 1, wherein
the controller adds or deletes another access point to or from a plurality of access points performing the coordinated communication, the other access point being an access point whose addition or deletion has been indicated.

4. The access point according to claim 1, wherein
the reconfiguration of the coordinated communication is performed according to influence of interference.

5. The access point according to claim 4, wherein
the influence of the interference is based on a result of measurement of influence of interference from another access point in the coordinated communication and a terminal associated with the other access point in the coordinated communication.

6. The access point according to claim 4, wherein
the information on the reconfiguration of the coordinated communication is information on another access point in which the coordinated communication in consideration of the influence of the interference is effective.

7. The access point according to claim 1, wherein
the information on the reconfiguration of the coordinated communication is information on another access point in which the coordinated communication for each coordination scheme is effective.

8. A method for controlling coordinated communication, the method comprising:
receiving, by an access point, information on reconfiguration of coordinated communication; and
performing, by the access point, the reconfiguration of the coordinated communication according to the information on the reconfiguration of the coordinated communication, the information on the reconfiguration of the coordinated communication having been received.
